# EUROPEAN PATENT SPECIFICATION

(11) **EP 3 099 884 B1**
(45) Date of publication and mention of the grant of the patent: **26.02.2020**
(21) Application number: 15743583.5
(22) Date of filing: 31.01.2015
(51) Int. Cl.: E21B 10/20, E21B 10/14, B23K 9/28, B23K 33/00

(54) **HYBRID DRILL BIT HAVING INCREASED SERVICE LIFE**
HYBRIDBOHRMEISSEL MIT ERHÖHTER LEBENSDAUER
TRÉPAN HYBRIDE DE DURÉE DE VIE ACCRUE

(30) Priority: 31.01.2014 US 201461934697 P; 30.01.2015 US 201514611167
(43) Date of publication of application: 07.12.2016
(73) Proprietor: Baker Hughes, a GE company, LLC, Houston, TX 77073 (US)
(72) Inventor: NGUYEN, Don Q., Houston, Texas 77066 (US); POTEET, Carl E., Houston, Texas 77073 (US); SULLIVAN, Eric C., Houston, Texas 77073 (US); BRADFORD, John F., The Woodlands, Texas 77381 (US); BLACKMAN, Mark P., Spring, Texas 77386 (US); MASSEY, Alan J., Houston, Texas 77070 (US); RICKS, Gregory L., Houston, Texas 77073 (US)
(74) Representative: BRP Renaud & Partner mbB Rechtsanwälte Patentanwälte Steuerberater
(86) International application number: PCT/US2015/014011
(87) International publication number: WO 2015/117047

(56) References cited:
- EP-A2- 0 238 758
- US-A- 4 314 132
- US-A- 4 314 132
- US-A1- 2009 272 582
- US-A1- 2010 012 392
- US-A1- 2010 012 392
- US-A1- 2012 111 638
- US-A1- 2012 111 638
- US-A1- 2012 205 160

## Description

### BACKGROUND OF THE INVENTION

Field of the Invention. The present inventions relate generally to earth-boring drill bits having one or more modules or subassemblies attached to the bit body.

### Description of the Related Art.

U.S. Patent No. 4,156,123 discloses "Segments of a rock bit are secured together by electron-beam welding. The segments are slightly spaced apart prior to welding by a thin shim of alloying metal such as titanium which improves ductility of the weld and is a strong carbide-former during welding. The shim is positioned between adjacent segments in the region of the crown or dome of the bit. The resulting welded interface is a fine-grain stress-relieved structure with good ductility and resistance to cracking."

U.S. Patent No. 4,866245 discloses "A method is shown for manufacturing rotary rock bits. The method reduces the effect of stresses in the area of the radial weld seams by providing a channel in the interior of the bit which intersects the root region of each weld, providing a generous radius for the root region of each radial weld."

EP0238758 discloses a method for welding method composite materials. US2012/111638 discloses an earth boring drill bit designed for a specific performance.

The inventions disclosed and taught herein are directed to improved methods for attaching drill bit modules or subassemblies to bit bodies to improve the service life thereof.

### BRIEF SUMMARY OF THE INVENTION

The present invention provides a method of manufacturing a drill bit as claimed in claim 1. The present invention also provides a modular drill bit as claimed in claim 5.

### BRIEF DESCRIPTION OF THE SEVERAL VIEWS OF THE DRAWINGS

The following figures form part of the present specification and are included to further demonstrate certain aspects of the present invention. The invention may be better understood by reference to one or more of these figures in combination with the detailed description of specific embodiments presented herein.
FIG. 1 illustrates a drill bit having fixed PDC cutters and roller cone sub-assemblies.
FIG. 2 illustrates a roller cone subassembly being located in a corresponding slot.
FIG. 3 illustrates a cross-sectional view of a roller cone subassembly located in a corresponding slot.
FIG. 4 illustrates a subassembly-to-body weldment according to the present invention.
FIGs. 5, 6 and 7 illustrate alternate embodiments of weldments according to the present inventions.

While the inventions disclosed herein are susceptible to various modifications and alternative forms, only a few specific embodiments have been shown by way of example in the drawings and are described in detail below. The figures and detailed descriptions of these specific embodiments are not intended to limit the breadth or scope of the inventive concepts or the appended claims in any manner. Rather, the figures and detailed written descriptions are provided to illustrate the inventive concepts to a person of ordinary skill in the art and to enable such person to make and use the inventive concepts.

### DETAILED DESCRIPTION

The Figures described above and the written description of specific structures and functions below are not presented to limit the scope of what Applicants have invented or the scope of the appended claims. Rather, the Figures and written description are provided to teach any person skilled in the art to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's ultimate goal for the commercial embodiment. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms. Lastly, the use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the Figures and are not intended to limit the scope of the invention or the appended claims.

We have created an earth boring drill bit and a manufacturing method for a drill bit that improves the service life thereof. This manufacturing method is especially applicable to drill bits comprising one or more roller cone subassemblies mated or joined to a bit body, but is not so limited in its application or utility. For example, and without limitation, this manufacturing method may be successfully employed on hybrid style bits having one or more integral fixed blades with PDC cutters thereon and one or more roller cone sub-assemblies attached to the bit body. As is known in the art, attaching roller cone sub-assemblies to bit bodies is technically challenging in that service failures often originate or occur at attachment points or are caused or enhanced by the attachment method employed. The present inventions provide an improved method of attaching sub-assemblies to bit bodies and comprise creating a weldment, such as a multi-pass weldment, having a higher strength, such as tensile strength, yield strength, fatigue strength and/or toughness, than the base metal(s) and the weldment having a root gap and root face defined by a predetermined or preselected set-off or gap between the bit body and the sub-assembly. While the use of a higher strength weldment may be generally considered a detriment in that it may create a stress concentration or discontinuity at the interface between the higher strength weldment and the lower strength base metal (e.g., the heat affected zone) that may exacerbate crack initiation or stress corrosion, it is believed that combining the higher strength weldment with the predetermined root gap and/or root face of the present invention establishes a synergistic balance of strength and reduced stress concentration that either alone would not create.

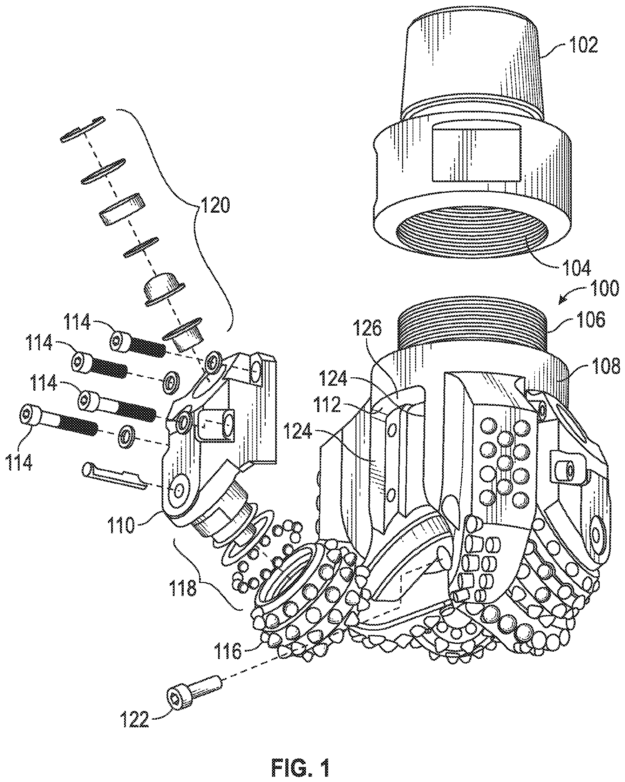

Referring now to FIG. 1, a hybrid drill bit 100 is illustrated as comprising a shank portion or section 102, which is threaded or otherwise configured at its upper extent for connection into a drillstring (not shown). At the lower extent of shank portion 102, a generally cylindrical receptacle 104 is formed. Receptacle 104 receives a correspondingly shaped and dimensioned cylindrical portion 106 at the upper extent of a bit body portion 108. Shank 102 and body 108 portions are joined together by inserting the cylindrical portion 106 at the upper extent of body portion 108 into the cylindrical receptacle 104 in the lower extent of shank 102. The receptacle 104 may be, for example, a Class 2 female thread that engages with a mating male thread at the upper extent of the body 108. The circular seam or joint may then be continuously bead welded to secure the two portions or sections together. Receptacle 104 and upper extent 106 need not be cylindrical, but could be other shapes that mate together, or could be a sliding or running fit relying on the weld for strength. Alternatively, the joint could be strengthened by a close interference fit between upper extent 108 and receptacle 104. Tack welding around, and/or fully welding, the seam also can be employed. Additionally, other embodiments may have the shank 102 and body 108 integrally formed.

A bit leg or head 110 (three are shown in FIG. 1) is received in an axially extending slot 112 (again, there is a slot 112 for each leg or head 110). The slot 112 may be dovetailed (and leg 110 correspondingly shaped) so that only axial sliding of leg 110 is permitted and leg 110 resists radial removal from slot 112. Alternately, other forms of centering or alignment structures may be employed between leg 110 and slot 112, such as but not limited to fasteners, such as bolts. Still further, no centering or alignment structure may be needed or employed.

As shown, a plurality (e.g., four) of fasteners 114 and washers may secure each leg 110 in slot 112 so that leg 110 is secured against axial motion in and removal from slot 112. While FIG.1 illustrates bolts, it will be understood that any type of fastener, including threaded studs, may be employed. A rolling cutter 116 is secured on a bearing associated with each leg 112 by a ball lock and seal assembly 118. The apertures in leg 110 through which fasteners 114 extend may be oblong and/or oversized, to permit the axial and/or radial positioning of leg 110 within slot 112 during manufacture, which in turn permits selection of the relative projection of the cutting elements on each rolling cutter. A lubricant compensator assembly 120 is also carried by each leg 110 and supplies lubricant to the bearing assembly and compensates for pressure variations in the lubricant during drilling operations. At least one nozzle 122 is received and retained in the bit body portion 108 to direct a stream of drilling fluid from the interior of bit 100 to selected locations proximate the cutters and blades of the bit. The slots 112 preferably have a pair of adjacent opposing sides 124. As will be discussed in further detail below, the sides 124 may be straight, inclined or relieved. A third side 126, which may be curved or flat, connects the two opposing sides 124.

Conventionally, the leg 110 fits into slot 112 with typical or conventional manufacturing tolerances (e.g., between about 127 and 381 µm (5 and 15 mils)), or may be pressed into place using an interference fit. Thereafter, a welded joint is established along the leg-to-slot interface to lock the roller cone subassembly to the body.

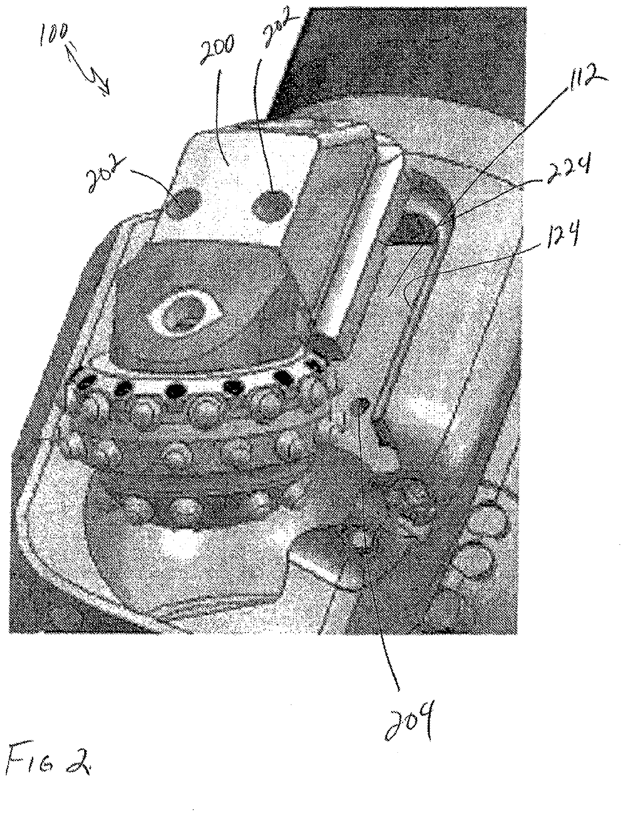

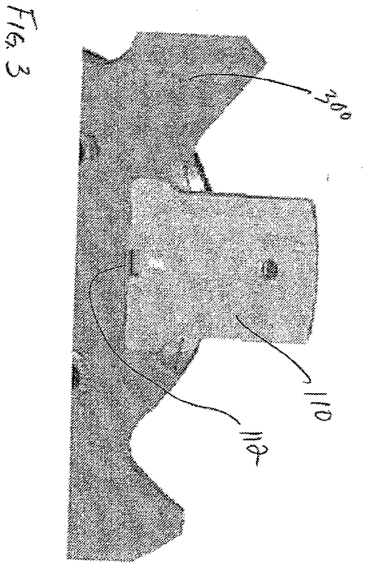

As illustrated in FIG. 2, roller cone assembly 200 is being placed into slot 112 and leg side 224 will be adjacent slot side 124. Also shown are fastener holes 202 in subassembly 200 and corresponding threaded receptacles 204 in slot 112. FIG. 3 illustrates a cross sectional view of a roller cone subassembly 110 located in slot 112. Also shown is fixed blade 300.

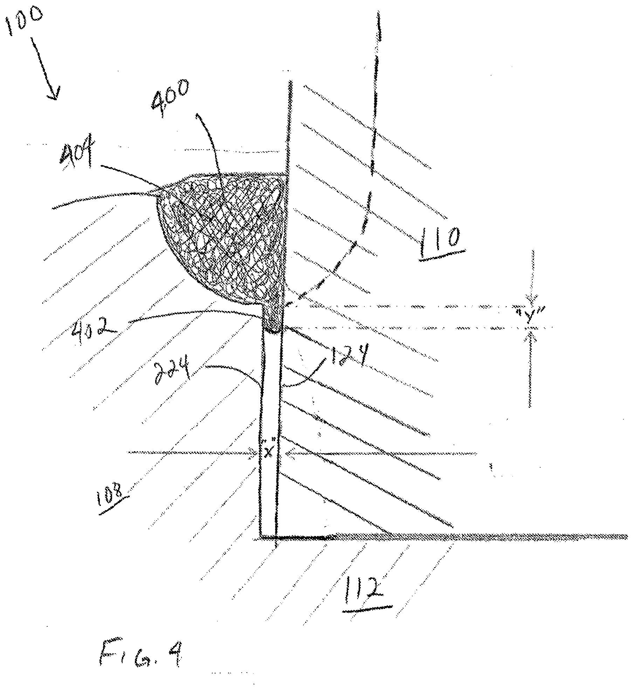

FIG. 4 illustrates a cut away view of leg 110 in slot 112 and having a multi pass weldment 400 according to the present invention. FIG 4 shows that the leg side 124 is spaced apart from slot side 224 by a distance "x," which is referred to herein as the root gap of weldment 400. FIG. 4 also shows that the weldment root 402 has a face dimension of "y," which is referred to herein as the root face of weldment 400. Also shown is weldment crown 404 formed between the leg side 124 and a relieved portion in the slot 112 / body 108. It will be appreciated that not all weldments 400 between the leg and slot will exhibit a root gap or a root face. For example, in interference fit systems there likely will be no root gap or root face component of the weldment. For conventional tolerance systems, the root gap and root face, to the extent such exist, likely will be inconsistent in dimension and existence. It is believed that creating a leg-to-slot weldment in interference and conventional tolerance systems causes residual stresses to exist in and adjacent the weld area, which residual stresses impair the service life of the drill bit. In addition, the inconsistency in size and existence of root gap and root face are believed to diminish the service life of a drill bit.

With reference again to FIG. 4, the present invention comprises using a predetermined or preselected root gap dimension "x" and a predetermined or preselected root face dimension "y" that function synergistically with the weldment material and/or with the weld procedure to improve the service life of the drill bit. The root gap "x" is generally wider than conventional manufacturing tolerances create, and is between about 635 and 1524 µm (25 and about 60 mils), and more preferably between about 762 and 1524 µm (30 and about 60 mils).The root face "y" is between about 635 and 1524 µm (25 and about 90 mils). It has been found that establishing a root gap and/or a root face for the weldment 400 of about these dimensions diminishes the residual stress field in and adjacent weldment 400. It is preferred, but not required, that the relationship between the root gap and the root face is "square," meaning that their dimensional values are substantially the same. However, the inventions disclosed herein contemplate that the relationship between root gap and root can be other than square. For out-of-square relationships, the root gap dimension is greater than the root face dimension. As an example, for a drill bit manufactured with 1.143 mm (0.045 inch) welding wire having a tensile strength of 689.5 MPa (100ksi), the root gap and the root face were set at the wire diameter (i.e., 1143 µm (45 mils)), according to the present invention.

It has further been found that creating a weldment having at least one material property greater than the corresponding material property of the base materials(s) in conjunction with a predetermined root gap and/or root face results in a surprising increase in the service life of the drill bit compared to conventionally manufactured bits. In the present invention, the material property is tensile strength or fatigue strength. For example, and without limitation, if the bit body material has a tensile strength of about 413.7-482.7 MPa (60-70 ksi) and the leg material (or roller cone subassembly material) has a tensile strength of about 551.6-586.0 MPa (80-85 ksi), it is presently preferred to establish a weldment from material having a tensile strength of about 689.5-758.45 MPa (100-110 ksi), or anywhere from about 15% to 85% greater strength.

As an example of one implementation of the present invention, a three-bladed hybrid bit body was fabricated from AISI 8620 material having three roller cone assembly slots. The roller cone legs or heads were fabricated from AISI 4715 material. The legs were located in the corresponding slot and threaded fasteners were used to locate the legs at the desired projection and location to establish the desired root gap of 1143 µm ± 127 µm (45 mils ± 5 mils). Once the legs were fastened in position, the
assembly was preheated to about 65.6°C (150°F), but not less than about 23.9°C (75°F). Once the assembly was preheated, a U-shaped multi pass weldment was created between the roller cone leg and bit body at the leg-to-slot interface, such as illustrated in FIG. 4. The welding process was a MIG (or GMAW) process using AWS 5.28 grade ER100S filler wire with a diameter of 889µm (35 mils). The welding current was set between about 180 and about 230 amps at a voltage of about 24 to about 28 volts. The shielding gas was a mixture of Argon with about 10% to about 15% Carbon Dioxide at a flow rate of about 0.99 to about 1.27 cubic metres per hour (about 35 to about 45 cubic feet per hour). The root gap weldment was laid down in a single pass with an interpass temperature not exceeding about 148.9°C (300°F). Thereafter, multiple passes were laid down to create the final weldment with the weldment interpass temperatures not exceeding about 148.9°C (300 °F).

While the previous discussion is an example of an actual embodiment, it will be appreciated that the inventions may be implemented in many other embodiments. For example, and without limitation, preheating is not required, but may be desired for large assemblies. When used, preheating may range from about ambient to about 65.6°C (150°F) and up to about 204.4°C (400°F). The preheat temperature may be limited by elastomeric components in the bit or other temperature limited components. The weldment interpass temperature(s) may range between about 65.6°C (150°F) and about 204.4°C (400°F), depending on the material properties (such as heat treatment) of the materials. Also, other forms of welding, such as stick or SMAW welding, may be used.

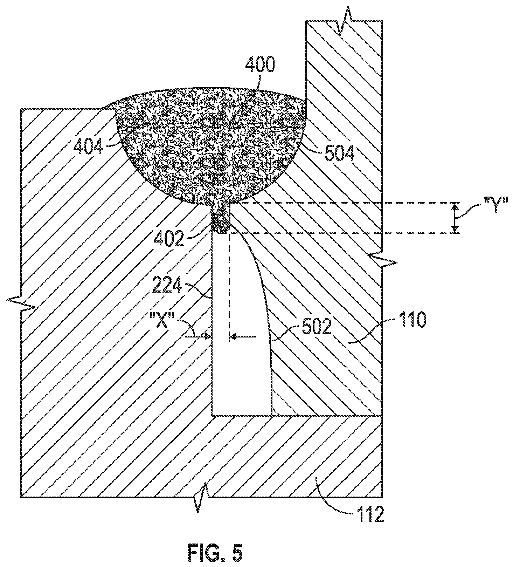

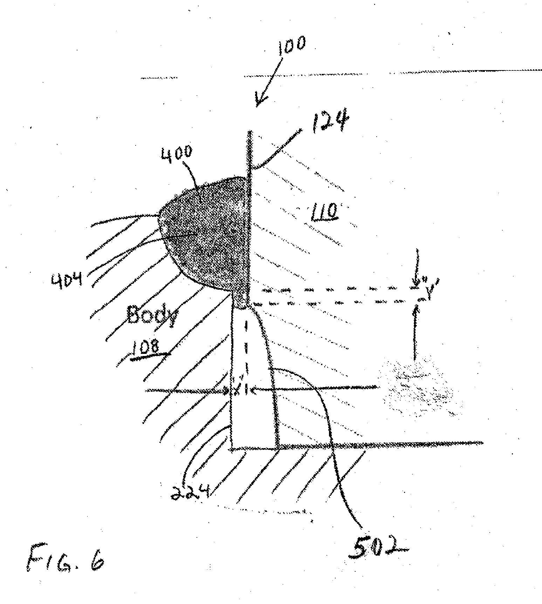

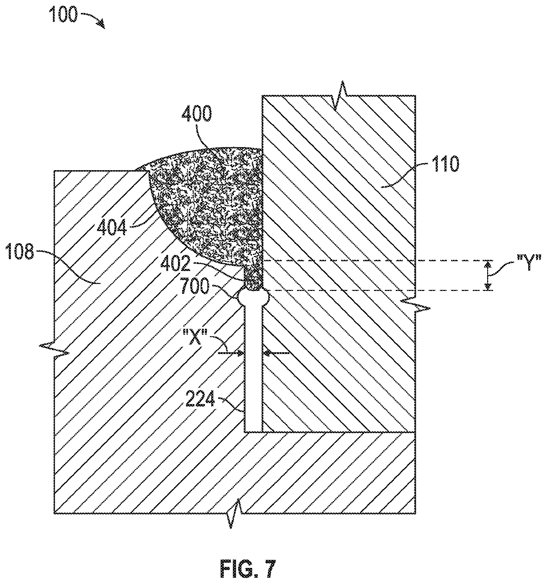

FIG. 5 illustrates an alternate implementation of the present invention, in which the leg 110 is relieved both above 504 and below 502 the root gap / root face area. FIG. 6 illustrates another embodiment in which only relief 502 below the root gap is utilized. FIG. 7 illustrates still another embodiment in which a localized area of relief 700 is created immediately below the root gap.

Having now the benefit of the details of our invention, it will be understood and appreciated drill bit modules or subassemblies, such as, but not limited to roller cone subassemblies, may be attached or fixed to the bit body using the predetermined root gap and/or root face spacing in conjunction with higher strength weldment. It is not necessary to use fasteners or other permanent centering or alignment structures in conjunction with this invention, as the unique weldment alone is sufficient to improve drill bit service life. However, as noted above, one or more fasteners or centering/alignment structures may be beneficial during the manufacturing process to hold the module in position during welding. Alternately, consumable or non-consumable inserts or spacers may be utilized to establish and/or maintain the predetermined root gap or root face spacing.

While embodiments have been described with multi pass weldments and claim 1 is directed to such arrangement, in accordance with claim 5, single pass weldments may be utilized where appropriate based on the materials being welded, the size of the parts, and the welding process being utilized.

Other and further embodiments utilizing one or more aspects of the inventions described above can be devised without departing from the Applicant's invention. Further, the various methods and embodiments of the methods of manufacture and assembly of the system, as well as location specifications, can be included in combination with each other to produce variations of the disclosed methods and embodiments. Discussion of singular elements can include plural elements and vice-versa.

The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The inventions have been described in the context of preferred and other embodiments and not every embodiment of the invention has been described. The disclosed and undisclosed embodiments are not intended to limit or restrict the scope or applicability of the invention conceived of by the Applicants, but rather, in conformity with the patent laws, Applicants intend to fully protect all such modifications and improvements that come within the scope of the following claims.

## Claims

1. A method of manufacturing a drill bit, comprising:
selecting a root gap dimension (x);
selecting a root face dimension (y);
establishing a root gap between a drill bit module (110) and a drill bit body (108), the root gap having the selected root gap dimension (x); and creating a multi-pass weldment (400) between the module (110) and the body (108) having the selected root gap and root face dimensions (x,y) and from weldment material having at least one material property greater in value than the same material property of the materials being joined, wherein the material property is tensile strength or fatigue strength;
**characterized in** selecting a root gap dimension (x) between about 635µm (25 mils) and about 1524µm (60 mils);
and selecting a root face dimension (y) greater than about 635µm (25 mils)and equal to or less than the selected root gap.

2. The method of claim 1, wherein the root gap dimension (x) is between about 762µm (30 mils) and about 1270µm (50 mils).

3. The method of claim 1, further comprising forming in the body (108) a cavity (112) configured to receive the module (110) and establish the selected root gap dimension (x), and optionally further comprising locating the module (110) in the body (108) prior to creating the weldment (400), adjusting the module (110) in the cavity (112) to establish a desired projection and attaching the module (110) to the body (108) with at least one threaded fastener.

4. The method of claim 1, further comprising maintaining a weldment interpass temperature of less than about 204°C (400°F), optionally further comprising maintaining a weldment interpass temperature of about 149°C (300°F).

5. A modular drill bit, comprising:
a weldment (400) joining at least one module to a drill bit body (108);
the weldment (400) having a preselected root gap dimension (x) and a preselected root face dimension (y); and
the weldment having at least one material property greater in value than a material property of the materials being joined, wherein the material property is tensile strength or fatigue strength ;
**characterized in** the root gap dimension (x) being between about 635µm (25 mils) and about 1524µm (60 mils), and the preselected root face dimension (y) is greater than about 635µm (25 mils) and equal to or less than the selected root gap dimension (x).

6. The bit of claim 5, wherein the root gap dimension (x) is between about 762µm (30 mils) and about 1270µm (50 mils).

7. The bit of claim 5, further comprising a cavity (112) formed in the body (108) and configured to receive the module (110) and establish the selected root gap dimension (x).

8. The bit of claim 5, further comprising a weldment interpass temperature of less than about 204°C (400°F), optionally further comprising a weldment interpass temperature of about 149°C (300°F).

9. A hybrid drill bit (100), comprising:
the modular drill bit of claim 5, the drill bit body (108) having at least one cutter blade, and at least one portion formed in the drill bit body (108) and configured to receive a roller cutter assembly leg (110);
wherein the at least one module (110) comprises a roller cutter assembly leg (110) attached to the drill bit body (108) at the body portion with at least one threaded fastener;
and the weldment (400) comprises a multi-pass weldment (400) joining the roller cutter assembly (110) to the bit body and formed with a weldment interpass temperature of about 149°C (300°F) or less;
wherein the at least one material property is tensile strength.

## Patentansprüche

1. Verfahren zum Herstellen eines Bohrmeißels, umfassend:
Auswählen einer Wurzelspaltabmessung (x);
Auswählen einer Wurzelflächenabmessung (y);
Herstellen eines Wurzelspalts zwischen einem Bohrmeißelmodul (110) und einem Bohrmeißelkörper (108), wobei der Wurzelspalt die ausgewählte Wurzelspaltabmessung (x) aufweist; und Erstellen einer mehrlagigen Schweißkonstruktion (400) zwischen dem Modul (110) und dem Körper (108), der die ausgewählten Wurzelspalt- und Wurzelflächenabmessungen (x, y) aufweist, und aus Schweißmaterial, das mindestens eine Materialeigenschaft aufweist, die im Wert höher als dieselbe Materialeigenschaft der zu verbindenden Materialien ist, wobei die Materialeigenschaft die Zugfestigkeit oder Dauerfestigkeit ist;
**gekennzeichnet durch** Auswählen einer Wurzelspaltabmessung (x) zwischen ca. 635 µm (25 mil) und ca. 1524 µm (60 mil);
und Auswählen einer Wurzelflächenabmessung (y), die größer als ca. 635 µm (25 mil) und gleich oder kleiner als der ausgewählte Wurzelspalt ist.

2. Verfahren nach Anspruch 1, wobei die Wurzelspaltabmessung (x) zwischen ca. 762 µm (30 mil) und ca. 1270 µm (50 mil) liegt.

3. Verfahren nach Anspruch 1, ferner umfassend ein Bilden eines Hohlraums (112) in dem Körper (108), der zum Aufnehmen des Moduls (110) und zum Herstellen der ausgewählten Wurzelspaltabmessung (x) konfiguriert ist, und optional ferner umfassend ein Anordnen des Moduls (110) in dem Körper (108) vor dem Erstellen der Schweißkonstruktion (400), ein Anpassen des Moduls (110) in dem Hohlraum (112) zum Herstellen eines gewünschten Vorsprungs und ein Befestigen des Moduls (110) an dem Körper (108) mit mindestens einem Gewindebefestigungselement.

4. Verfahren nach Anspruch 1, ferner umfassend ein Aufrechterhalten einer Schweißkonstruktionszwischenlagentemperatur von weniger als ca. 204 °C (400 °F), optional ferner umfassend das Aufrechterhalten einer Schweißkonstruktionszwischenlagentemperatur von ca. 149 °C (300 °F).

5. Modularer Bohrmeißel, umfassend:
eine Schweißkonstruktion (400), die mindestens ein Modul mit einem Bohrmeißelkörper (108) verbindet;
die Schweißkonstruktion (400) eine vorgewählte Wurzelspaltabmessung (x) und eine vorgewählte Wurzelflächenabmessung (y) aufweist; und
die Schweißkonstruktion mindestens eine Materialeigenschaft aufweist, die im Wert höher als eine Materialeigenschaft der zu verbindenden Materialien ist, wobei die Materialeigenschaft die Zugfestigkeit oder Dauerfestigkeit ist;
**dadurch gekennzeichnet, dass** die Wurzelspaltabmessung (x) zwischen ca. 635 µm (25 mil) und ca. 1524 µm (60 mil) liegt und die vorgewählte Wurzelflächenabmessung (y) größer als ca. 635 µm (25 mil) und gleich oder kleiner als die ausgewählte Wurzelspaltabmessung (x) ist.

6. Spitze nach Anspruch 5, wobei die Wurzelspaltabmessung (x) zwischen ca. 762 µm (30 mil) und ca. 1270 µm (50 mil) liegt.

7. Spitze nach Anspruch 5, ferner umfassend einen Hohlraum (112), der in dem Körper (108) ausgebildet und zum Aufnehmen des Moduls (110) und zum Herstellen der ausgewählten Wurzelspaltabmessung (x) konfiguriert ist.

8. Spitze nach Anspruch 5, ferner umfassend eine Schweißkonstruktionszwischenlagentemperatur von weniger als ca. 204 °C (400 °F), optional ferner umfassend eine Schweißkonstruktionszwischenlagentemperatur von ca. 149 °C (300 °F).

9. Hybridbohrmeißel (100), umfassend:
den modularen Bohrmeißel nach Anspruch 5, wobei der Bohrmeißelkörper (108) mindestens eine Schneidklinge und mindestens einen Abschnitt aufweist, der in dem Bohrmeißelkörper (108) ausgebildet und zum Aufnehmen eines Rollenschneidanordnungsschenkels (110) konfiguriert ist;
wobei das mindestens eine Modul (110) einen Rollenschneidanordnungsschenkel (110) umfasst, der am Bohrmeißelkörper (108) an dem Körperabschnitt mit mindestens einem Gewindebefestigungselement befestigt ist;
und die Schweißkonstruktion (400) eine mehrlagige Schweißkonstruktion (400) umfasst, die die Rollenschneidanordnung (110) mit dem Bohrmeißelkörper verbindet und mit einer Schweißkonstruktionszwischenlagentemperatur von ca. 149 °C (300 °F) oder weniger ausgebildet ist;
wobei die mindestens eine Materialeigenschaft die Zugfestigkeit ist.

## Revendications

1. Procédé de fabrication d'un trépan, comprenant :
la sélection d'une dimension d'intervalle de racine (x) ;
la sélection d'une dimension de face de racine (y) ;
l'établissement d'un intervalle de racine entre un module de trépan (110) et un corps de trépan (108), l'intervalle de racine ayant la dimension d'intervalle de racine (x) sélectionnée ; et la création d'un assemblage soudé en plusieurs passes (400) entre le module (110) et le corps (108) ayant les dimensions d'intervalle de racine et de face de racine (x,y) sélectionnées et à partir d'un matériau d'assemblage soudé ayant au moins une propriété de matériau supérieure en valeur à la même propriété de matériau des matériaux étant joints, dans lequel la propriété de matériau est la résistance à la traction ou la résistance à la fatigue ;
**caractérisé par** la sélection d'une dimension d'intervalle de racine (x) entre environ 635 µm (25 mils) et environ 1524 µm (60 mils) ;
et la sélection d'une dimension de face de racine (y) supérieure à environ 635 µm (25 mils) et égale ou inférieure à l'intervalle de racine sélectionné.

2. Procédé selon la revendication 1, dans lequel la dimension d'intervalle de racine (x) est comprise entre environ 762 µm (30 mils) et environ 1270 µm (50 mils).

3. Procédé selon la revendication 1, comprenant en outre la formation dans le corps (108) d'une cavité (112) configurée pour recevoir le module (110) et établir la dimension d'intervalle de racine (x) sélectionnée, et comprenant éventuellement en outre la localisation du module (110) dans le corps (108) avant de créer l'assemblage soudé (400), l'ajustement du module (110) dans la cavité (112) pour établir une projection souhaitée et la fixation du module (110) au corps (108) avec au moins une fixation filetée.

4. Procédé selon la revendication 1, comprenant en outre le maintien d'une température entre les passes de l'assemblage soudé inférieure à environ 204 °C (400 °F), comprenant éventuellement en outre le maintien d'une température entre les passes de l'assemblage soudé d'environ 149 °C (300 °F).

5. Trépan modulaire, comprenant :
un assemblage soudé (400) reliant au moins un module à un corps de trépan (108) ;
l'assemblage soudé (400) ayant une dimension d'intervalle de racine (x) présélectionnée et une dimension de face de racine (y) présélectionnée ; et
l'assemblage soudé ayant au moins une propriété de matériau supérieure en valeur à une propriété de matériau des matériaux étant joints, dans lequel la propriété de matériau est la résistance à la traction ou la résistance à la fatigue ;
**caractérisé en ce que** la dimension d'intervalle de racine (x) est comprise entre environ 635 µm (25 mils) et environ 1524 µm (60 mils), et la dimension de face de racine (y) présélectionnée est supérieure à environ 635 µm (25 mils) et égale ou inférieure à la dimension d'intervalle de racine (x) sélectionnée.

6. Trépan selon la revendication 5, dans lequel la dimension d'intervalle de racine (x) est comprise entre environ 762 µm (30 mils) et environ 1270 µm (50 mils).

7. Trépan selon la revendication 5, comprenant en outre une cavité (112) formée dans le corps (108) et configurée pour recevoir le module (110) et établir la dimension d'intervalle de racine (x) sélectionnée.

8. Trépan selon la revendication 5, comprenant en outre une température entre les passes de l'assemblage soudé inférieure à environ 204 °C (400 °F), comprenant éventuellement en outre une température entre les passes de l'assemblage soudé d'environ 149 °C (300 °F).

9. Trépan hybride (100), comprenant :
le trépan modulaire selon la revendication 5, le corps de trépan (108) ayant au moins une lame de coupe, et au moins une partie formée dans le corps de trépan (108) et configurée pour recevoir une patte d'ensemble d'outil de coupe à roulette (110) ;
dans lequel l'au moins un module (110) comprend une patte d'ensemble d'outil de coupe à roulette (110) fixée au corps de trépan (108) au niveau de la partie de corps avec au moins une fixation filetée ;
et l'assemblage soudé (400) comprend un assemblage soudé en plusieurs passes (400) reliant l'ensemble d'outil de coupe à roulette (110) au corps de trépan et formé avec une température entre les passes de l'assemblage soudé d'environ 149 °C (300 °F) ou moins ;
dans lequel l'au moins une propriété de matériau est la résistance à la traction.
